# EUROPEAN PATENT SPECIFICATION

(11) **EP 1 365 546 B1**
(45) Date of publication and mention of the grant of the patent: **14.12.2005**
(21) Application number: 02253575.1
(22) Date of filing: 21.05.2002
(51) Int. Cl.: H04L 12/56

(54) **Programmable network node for performing multiple processes**
Programmierbarer Netzwerkknoten zur Ausführung mehrerer Prozesse
Noeud de réseau programmable pour effectuer des procédés multiples

(43) Date of publication of application: 26.11.2003
(73) Proprietor: HITACHI EUROPE LIMITED, Maidenhead, Berkshire, SL6 8YA (GB)
(72) Inventor: Suzuki, Toshiaki, Cambridge CB1 8YU (GB); Denazis, Spyros G., Cambridge CB1 7AF (GB)
(74) Representative: Read, Matthew Charles

(56) References cited:
- EP-A- 0 986 220
- EP-A- 1 111 507
- CARDOE R ET AL: "LARA: A PROTOTYPE SYSTEM FOR SUPPORTING HIGH PERFORMANCE ACTIVE NETWORKING" ACTIVE NETWORKS. INTERNATIONAL WORKING CONFERENCE, IWAN. PROCEEDINGS. PROCEEDINGS OF THE INTERNATIONAL CONFERENCE ON ACTIVE NETWORKS, XX, XX, 30 June 1999 (1999-06-30), pages 117-131, XP008001843
- WETHERALL D J ET AL: "ANTS: a toolkit for building and dynamically deploying network protocols" OPEN ARCHITECTURES AND NETWORK PROGRAMMING, 1998 IEEE SAN FRANCISCO, CA, USA 3-4 APRIL 1998, NEW YORK, NY, USA,IEEE, US, 3 April 1998 (1998-04-03), pages 117-129, XP010272584 ISBN: 0-7803-4783-8

## Description

This invention relates to a programmable network node configuration for performing multiple processes on data, and has particular but not exclusive application to networks that utilise IP/TCP (Transmission Control Protocol) such as the Internet.

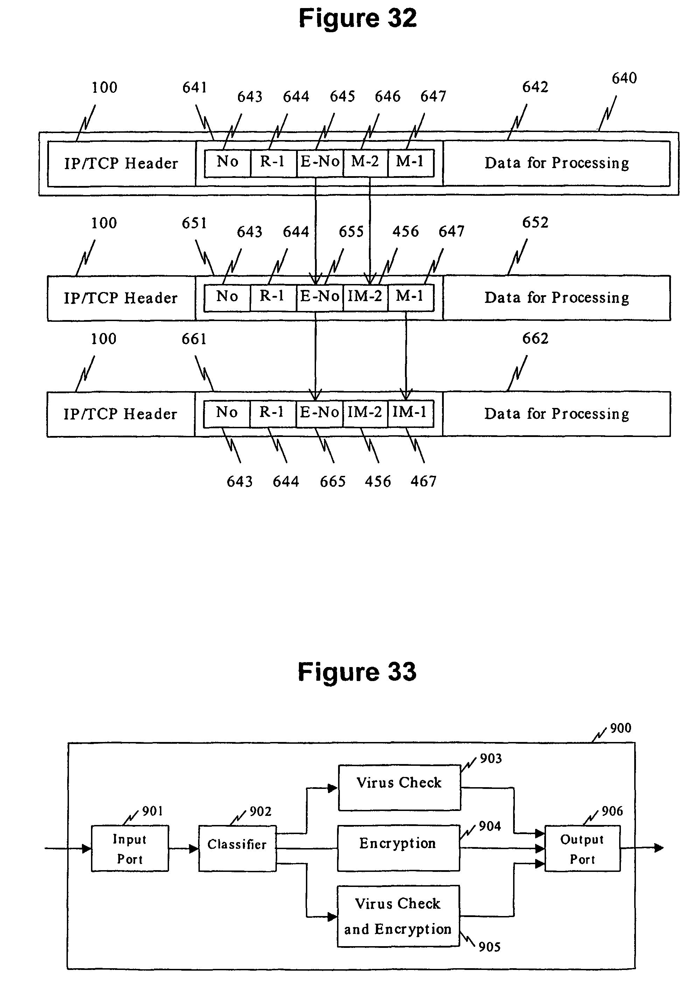

Conventionally, in network data communications, data is sent from a sender side of a network such as the Internet, to a receiver side through network nodes such as routers, that carry out predetermined, fixed processing on the data. It has been proposed that the nodes should perform more than one processing service and in "ANTS: A Toolkit for Building and Dynamically Deploying Network Protocols" http://www.tns.lcs.mit.edu/publications/openarch98.html, it is proposed that a network be installed with a more than one service by installing several programs into a node such as router and executing different services dynamically. In this programmable network, a user sends packets into the programmable network after installing the program that the user wants to use in nodes. When the packets arrive at programmable node, the program that the user installed processes the packets at the node. Figure 33 of the accompanying drawings shows an example of such a conventional node 900, which comprises an input port 901, a classifier section 902, processing modules 903-905 and an output port 906. The node 900 receives packet data that contains a request for single processing, at the input port 901. The received packet data is passed to the classifier section 902, which forwards the received packet data to an appropriate processing module based on the processing request in the packet data. For example, if the packet data contain a request for virus checking processing, the packet data are transmitted to the processing module 903 that executes a virus checking process. If the packet data contains a request for encryption processing, the packet data are transmitted to the processing module 904 that executes an encryption process. If the packet data contains a request for both virus checking and encryption processing, the packet data are transmitted to the processing module 905 that executes the virus checking processing followed by the encryption processing. Each of the processing modules transmits the packet data to the output port 906 after executing a single processing. Then, the packet data are transmitted by output port 906 into the network. In this node, only single execution is carried out on the packet data by each processing module. For example, the processing module only provides the virus checking processing, which is performed once in the module on the data. When two processes are carried out, such as virus checking and encryption, it is necessary to install a program configuration that contains two processes in one module.

Therefore, the resource of the node is used up unnecessarily because the same program needs to be provided redundantly in different modules and the user cannot use a combination or permutation of the processes available in the modules. Thus, the flexibility of processing in the conventional node is very limited.

Another approach to multiple processing is described in Decasper, D., Dittia, Z., Parulkar, G.,Plattner, B., "Routers Plugins - A Software Architecture for Next Generation Routers", ICCC/ACM Transaction on Networking, February 2000 (http://www.acm.org/sigcomm/sigcomm98/tp/paper19.pdf) and also Decasper, D., Dittia, Z., Parulkar, G.,Plattner, B., "Router Plugins - A Modular and Extensible Software Framework for Modern High Performance Integrated Services Router", Washington University Tech Report WUCS-98-08, February 1998 (http://www.arl.wustl.edu/~dan/papers/router plugins.pdf) (also presented at ACM SIGCOMM '98 conference). In this configuration, multiple processing of data packets is carried out using instances of multiple processes selected in accordance with data in a database, in dependence on routing data for the data packets. Routing data in the header of a data packets is utilised to determine the multiple processing carried out at the node on the data. Thus the processing is carried out on the assumption that all data sent along a particular route should be subject to the same processing, which is inflexible and may be inconvenient.

Another approach is described by Feldmeier, D., McAuley, A., Smith, J., Bakin, D., Marcus, W., Raleigh, T., "Protocol Boosters", IEEE JSAC April, 1998. (http://www.cis.upenn.edu/~boosters/)

A number of approaches have been developed for selecting different processes and reference is directed to Tschudin, C., "Active Ad-hoc Networking" (http://www.docs.uu.se/~tschudin/pub/cft-1999-kth.pdf); Stiller, B., Class, C., Waldvogel, M., Caronni, G., Bauer, D., "A Flexible Middleware for Multimedia Communication: Design, Implementation, and Experience", IEEE Journal on Selected Area In Communication, Vol.17, No.9, pages 1580-1598, September, 1999. (htip://olymp.org/~caronni/work/papers/JSAC-dacapo.pdf); and Wolf, T., Decasper, D., Tschudin, Ch., "Tags for High Performance Active Networks", In Proceedings of OpenArch 2000, April 2000 (http://www.docs.uu.se/~tschudin/pub/cft-2000-tan.pdf).

Also, as regards prior art, a processing concept of association for a function and its inverse can be seen in the following reference - Keller, R., Ramamirtham, J., Wolf, T., Plattner, B., "Active Pipes: Service Composition for Programmable Networks, Milcom 2001, 2001 (http://ccrc.wustl.edu/~wolf/papers/active pipes. pdf.

Another example is given in EP 0 986 220 A2.

The present invention provides an improved, more flexible way of performing multiple processing.

The invention is carried out by the apparatus of claim 1, by the system of claim 2 and by the method of claim 15.

In accordance with the invention there is provided a network node for use in a network to execute multiple processes on network routable data, comprising a plurality of processing modules, and a controller to direct the data to the processing modules selectively to perform sequential multiple processing thereof wherein the node is operable to detect process code data in the routable data corresponding to user selected processes to be performed by the modules on the data, and operable to provide order data for determining the order in which the user selected processes are to be performed by the processing modules in dependence on the detected process code data.

The node may be arranged with an ordering database for containing the order data, and an order decision configuration for determining the order data from the database in dependence on the process codes in the routable data.

The node may be configured as a node for use on a sender side of a network, in association with a sender side user terminal coupled to the node.

The ordering database may be in the node itself or the user terminal.

A process categorisation database may be included in the user terminal for providing the process code data corresponding to the individual processes selected by the user.

Also, the node may receive routable data which is to be subject to the multiple processing, together with routable data for which no multiple processing is requested, and a classification database which contains data for classifying the routable data may be used so that only the data for which multiple processing is requested, is directed to the processing modules.

The processing modules may be configured to provide data corresponding to the inverse of the processes that they execute and associate the inverse data with data that comprises the outcome of their executed process, to be routed to a receiver side of the network.

The node may also be configured for use on a receiver side of a network, and a receiver side terminal may be coupled to the node to receive the data processed by the node. The node may receive routed data through the network, that includes data corresponding to multiple processing carried out at a sender side node, and is configured to perform multiple processing which is the inverse to that performed at the receiver side node.

A service provider may be utilised to supply data to the or each said database, to allow them to be updated.

In order that the invention may be more fully understood, embodiments thereof will now be described by way of example with reference to the accompanying drawings wherein:
Figure 1 is a block diagram of the sender side of a first embodiment of a programmable multiple processing system according to the invention;
Figure 2 shows the contents of database (A) shown in Figures 1 and 12;
Figure 3 illustrates the format of the data that is sent from sender to receiver in the first embodiment;
Figure 4 shows the contents of the database (B) depicted in Figures 1, 12 and 13;
Figure 5 illustrates how to make an internal header for executing multiple processing in the first embodiment;
Figure 6 illustrates the procedure of how to change an internal header data after each processing in a processing module;
Figure 7 illustrates inverse processing data that is kept at each processing module in Figure 1;
Figure 8 is a block diagram of the receiver side of the programmable multiple processing system of the first embodiment of the invention;
Figure 9 illustrates the contents data of the database (C) depicted in Figure 8.
Figure 10 illustrates how to make an internal header for executing multiple inverse processing;
Figure 11 shows how to change the internal header data after each inverse processing in an inverse processing module;
Figure 12 is a block diagram of the sender side of a second embodiment of programmable multiple processing system according to the invention;
Figure 13 is a block diagram of a network node for a third embodiment of the invention;
Figure 14 shows the contents of the database (D) that is depicted in Figure 13;
Figure 15 shows the format of the data that is sent from the sender to the receiver in the third embodiment;
Figure 16 is a block diagram of the sender side of a fourth embodiment of programmable multiple processing system according to the invention;
Figure 17 shows the format of the data that is sent from sender to receiver in the fourth embodiment;
Figure 18 illustrates the contents of the database (E) depicted in Figure 16;
Figure 19 is a block diagram of the sender side of a fifth embodiment of programmable multiple processing system according to the invention;
Figure 20 illustrates the contents of the database (F) depicted in Figure 19;
Figure 21 illustrates the format of the data that is sent from sender to receiver in the fifth embodiment;
Figure 22 shows internal header changing after each processing carried out by one of the processing modules;
Figure 23 shows the data that is kept at each processing module in Figure 19 for executing inverse processing to the processed data, at the receiver side;
Figure 24 is a block diagram of the receiver side for the fifth embodiment of the invention.
Figure 25shows internal header changing at the reverse section that is shown in Figure 24;
Figure 26 illustrates internal header changing after being process carried out by the inverse processing modules;
Figure 27 is a block diagram of the sender side of a sixth embodiment of programmable multiple processing system according to the invention;
Figure 28 illustrates the contents of the database (G);
Figure 29 shows the format of the data that is sent from sender to receiver in the sixth embodiment;
Figure 30 shows the contents of the database (H);
Figure 31 illustrates how to make an internal header for executing multiple processing in the sixth embodiment;
Figure 32 illustrates internal header changing after being processed in each processing module; and
Figure 33 is a block diagram of the previously described prior art network node.

In the following embodiments of the invention, data is sent through a network from a sender side user terminal to a receiver side terminal through respective network nodes at which selectable multiple processes are executed in an individually programmable order.

### First embodiment

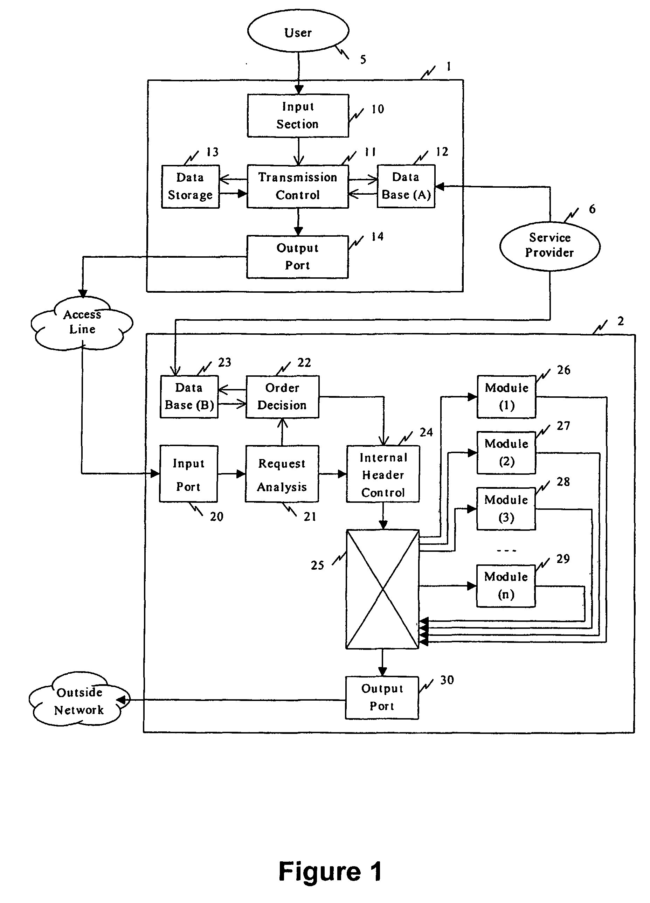

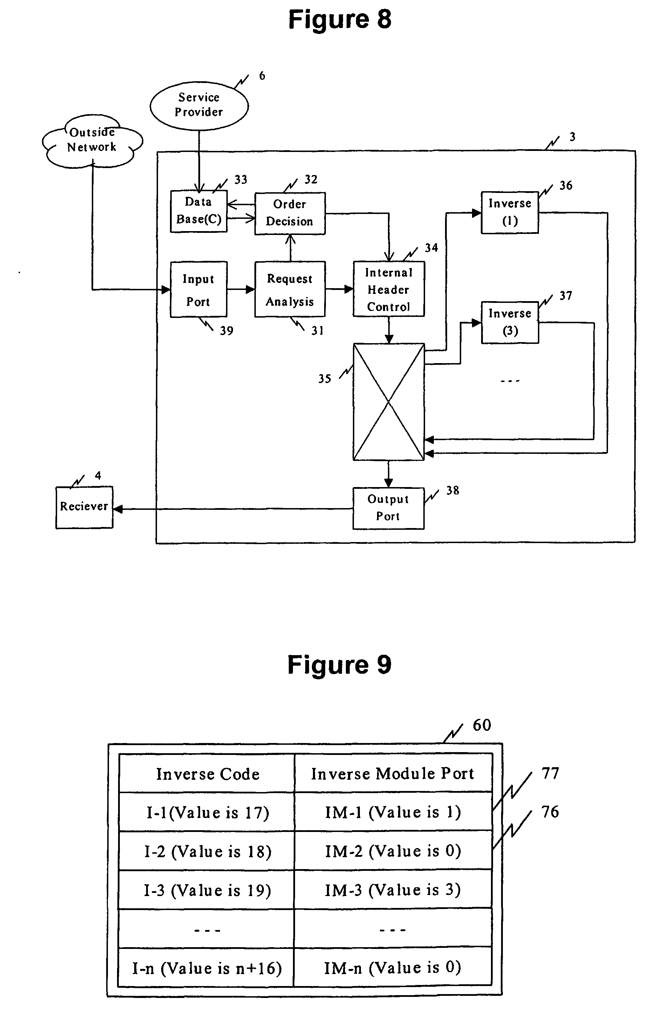

The sender side of the system is shown in Figure 1, and comprises terminal 1 and a network node 2. The receiver side is shown in Figure 8, and comprises a receiver side network node 3 and a receiver terminal 4.

As shown in Figure 1, the terminal 1 is connected to the network node 2 by way of an access line such as part of an IP (Internet Protocol) network. The node 2 is also connected to an outside network such as an IP network. The user terminal 1 includes an input section 10, a transmission controller 11, a database (A) 12, a data storage section 13 and an output port 14. The network node 2 includes an input port 20, a request analysis section 21, an order decision section 22, a database (B) 23, an internal header control section 24, a routing section 25, processing modules (1-n) 26-29 and an output port 30. It will be understood that the functionality of the various components may be provided by individual circuit components or by one or more programmed microprocessors. For example, the processing modules (1-n) 26-29 may comprise individual microprocessors with individual memories that contain respective programs for executing the individual processes that make up the multiple processing. The programs may be downloaded from the service provider or otherwise set up to provide the desired functionality before starting.

Operation of the sender side system of Figure 1 will now be described in detail. Firstly, a user 5 uses input section 10 to select data to be sent to the receiver 4, together with the multiple processing to be carried out. The multiple processing is to be executed on the selected data at the network node 2. By way of example, the user 5 may select encryption and a virus check as the individual components of the multiple processing to be carried out on the selected data. The user does not specify the order in which the individual processes are to be executed and the system determines the order automatically, if a particular order is required, as will be evident hereinafter

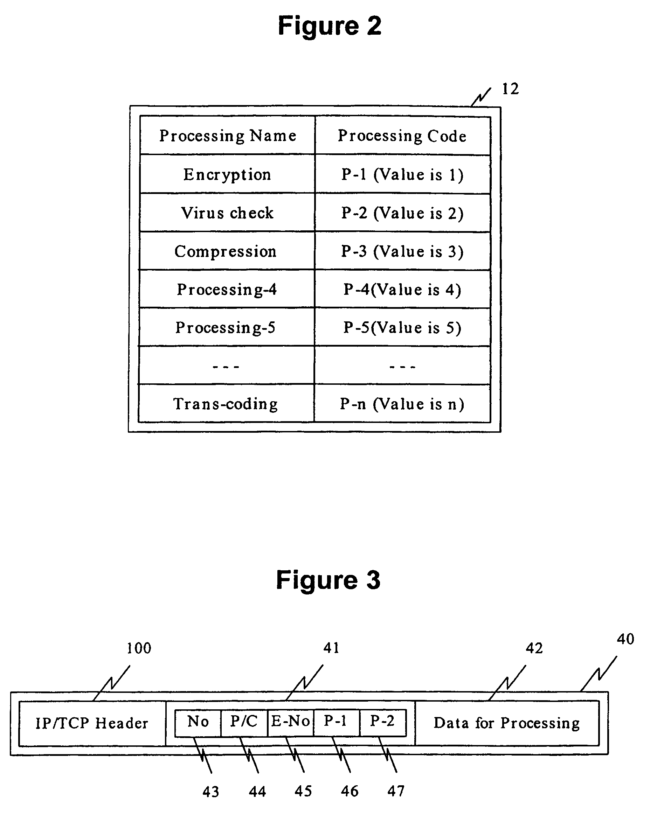

The transmission controller 11 then obtains processing codes P for the processes selected by the user 5. The processing codes are stored in the database (A) and are depicted in Figure 2. A service provider 6 has previously downloaded the codes into the database (A) and the database (A) 12 may also be updated when the service provider 6 installs a new service. Since in this example, the user 5 has selected encryption and the virus checking for the multiple processing, the relevant processing codes are P-1 and P-2 respectively as shown in Figure 2.

Then, the transmission controller 11 accesses the data storage section 13 in order to read the data that the user 5 wants to send to receiver 4. The user 5 stores the data in the data storage section 13 before starting.

After reading the data to be processed, the transmission controller 11 assembles a data package 40 depicted in Figure 3. The data package 40 comprises IP/TCP (Transmission Control Protocol) header data 100, multiple processing draft header data 41 and a data 42 to be processed. In detail, the IP/TCP header data 100 includes routing data comprising an IP address for the sender, the IP address of a receiver, a port number for the sender, a port number of the receiver and so forth. The selection of the routing data for the header 100 may be performed by the user in a conventional manner and is not described in detail herein. The multiple processing header data 41 comprises number data 43, permutation/combination data 44, an executed processing number data 45 and individual processing code data 46, 47 corresponding to individual processing requests. The number data 43 comprises one byte and indicates how many processes have been requested. In this example, the user has selected two processes, namely encryption and a virus check, and therefore the number data 43 has a value of two. The permutation/combination data 44 comprises one byte and indicates whether or not there is a particular order for the multiple processing. At this stage, data 44 does not show any particular permutation or combination and has a default value, such as zero. The data 44 will be provided before processing is started at the network node 2. The executed processing number 45 comprises one byte and shows how many processes are executed. At this moment, as none of processes have been executed, this data 45 is set to zero. This data value will be changed after each processing has been carried out in the processing modules of the node 2, as explained in more detail later. The value of the number data 43 corresponds to the number of processing request data, such as 46 and 47. The processing request data each comprise one data byte. In this example, since there are two processing data requests, the value of the number data is two. As the user 5 selected the processing of encryption and virus check, the data 46 and the data 47 are set to have values one and two respectively according to the table of database (A) shown in Figure 2. After the transmission controller 11 has assembled the data package 40, it sends the package 40 as an IP data packet through the output port 14 to the network node 2.

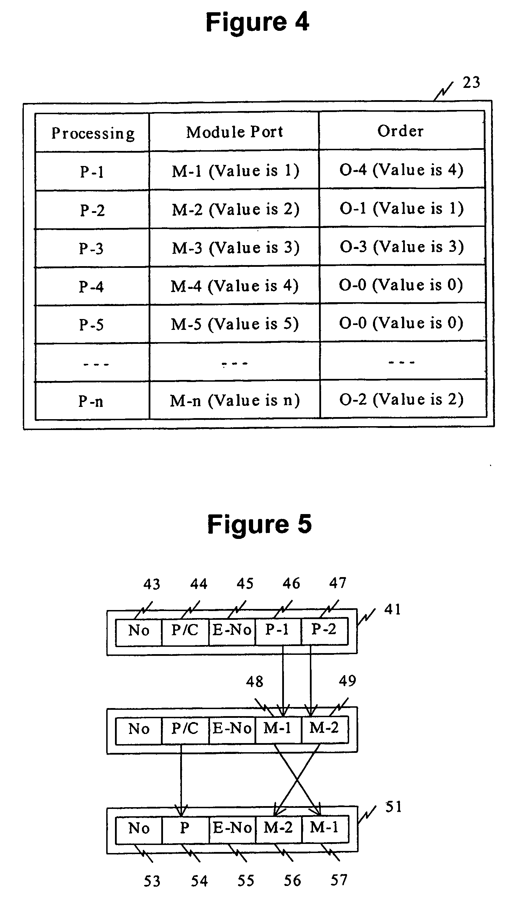

Operation of the network node 2 will now be described. The data package 40 is received by the input port 20 and is forwarded to the request analysis section 21. The request analysis section 21 extracts the header data 41 that is shown in Figure 3 concerning the processing requests, and forwards the data to the order decision section 22. The order decision section 22 then decides the order for the multiple processing that has been requested by the user, by referring the database (B) 23. The data in database (B) 23 is shown in Figure 4 and is stored therein by the service provider 6 before starting the system. In addition, the database (B) may be updated by the service provider 6 when a new service is to be installed in the system. The database (B) has three columns. The first, left hand column shows the processing code P. The second, middle column shows a module port M for the modules 26-29 assigned to execute processing corresponding to the processing code P. The third, right hand column shows the order of processing.

If there is no order of processing, the value of the processing order is set to zero.

Figure 5 illustrates the operation that is executed by the order decision section 22. The order decision section 22 operates on the header data 41 that it receives from the request analysis section 21. Firstly, the order decision section 22 converts the value of the processing codes P into corresponding module port values M according to the data in database (B). More specifically, the processing code P-1 corresponds to the module port M-1 in respect of the data 48 and P-2 corresponds to M-2 in respect of the data 49. Then, the order decision section 22 finds an order value for every requested processing by referring to database (B) 23. In this example, the user 5 requested two processes that are destined for ports M-1 and M-2, and so referring to Figure 4, it can be seen that the corresponding order values are O-4 and O-1 and the real values of O-4 and O-1 are four and one. If there is at least one order value that is not zero, the order decision section 22 sorts the processing order according to descending order values O. If all of the order values are the same, the order section doesn't sort the processing order but selects an appropriate value of the combination data 44 as explained in more detail hereinafter. In the present example, since the value of O-4 and O-1 both have non-zero values, the order decision section 22 changes the order of M-1 and M-2 corresponding to their order values in the database (B) 23. Specifically, the lower order value corresponding to the data 48 forms the data 57, and the higher order value associated with the data 49 forms the data 56, which is positioned before the data 57, as shown in Figure 5.

In addition, the value of the data 44 is selected. In the present example, since there is a particular order of processing, the value of data 44 corresponding to a permutation is selected as the value of the data 54. A value of one represents a permutation and the value of two represents a combination. Consequently, the processing can be executed in the order of module ports M-2 and then M-1. The value of the data 53 and the data 55 are the same as the value of the data 43 and the data 45 respectively.

Thus, as described above, the order decision section 22 decides the order of the multiple processing so that a new header 51 can be produced. The order decision section 22 sends data for the new header 51 to the internal header control section 24, which also receives the data 40 from the request analysis section 21. Then, the internal header control section 24 replaces the data 41 shown in Figure 3 by the data 51 shown in Figure 5. After that, the internal header control section 24 transmits the data 100, the data 51 and the data 42 to the routing section 25.

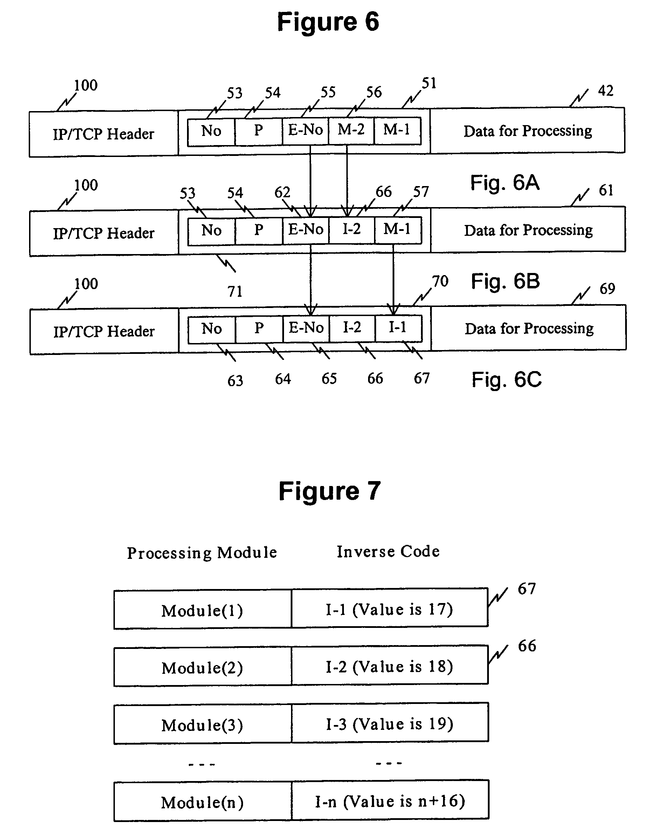

Figure 6A shows the data 100, the data 51 and the data 42 received by the routing section 25. At first, the routing section 25 compares the values of the number data 53 and the executed processing number data 55. If the both values are the same, the routing section 25 sends the data 100, the data 51 and the data 42 to a receiver 4 through the network by way of the output port 30. If the values are different, the routing section 25 calculates the difference between the value of the data 53 and the value of the data 55. The value of the difference between the data 53 and the data 55 represents the number of processes that remain to be executed. After each process execution, the routing section 25 recalculates the value of the data 55 to be the current value plus one.

The routing section 25 checks the data that is pointed to by the data 55 plus one, from the place of data 55. For example, if the value of the data 55 plus one equal to one, the routing section 25 checks first data 56 from the data 55. Then, the routing section 25 sends the data 100, the data 51 and the data 42 to the processing module that is identified by the module port data 56. Initially, the value of the executed processing data 55 equals to zero. Therefore the value of the data 55 plus one equal to one. Then the routing section 25 checks the value of the module port data 56. The value of the data 56 corresponds to module port two. Therefore, the routing section 25 sends the data 100, the data 51 and the data 42 to processing module (2) 27 shown in Figure 1. Then, processing module (2) 27 processes the data 42 in accordance with its pre-loaded program and thereby produces new data 61. In this example, a virus-checking program has been pre-installed in the processing module (2) 27.

The processing module (2) 27 replaces the data 56 by the data 66 as shown in Figure 6B. The processing performed by the various modules on the sender side may be performed in an inverse manner on the receiver side to recover the processed data e.g. encryption on the sender side and inverse decryption on the receiver side and an appropriate inverse code I is allocated to the data as shown in Figure 7 to enable the inverse computation to be carried out later on the receiver side. Also, as previously explained, the processing module (2) 27 replaces the value of the data 55 by the value of the data 62 that is the data 55 plus one. Then the processing module (2) 27 sends the data 100, the data 71 and the data 61 back to the routing section 25.

The routing section 25 thus receives the data 100, the data 71 and the data 61 depicted in Figure 6B. Then the procedure is repeated. Thus, the routing section 25 checks the data that is pointed to by the data 62 plus one. In this example, the value of the data 62 plus one equal to two, and so the routing section 25 checks the second data 57 from the data 62. Then the routing section 25 sends the data 100, the data 71 and the data 61 to the proper processing module that is pointed to by the module port data 57. At this time, the value of the executed processing data 62 equals to one. Therefore, the value of the data 62 plus one is equal to two. Then the routing section 25 checks the value of the module port data 57. At this time, the value of the data 57 corresponds to the module port one. Therefore, the routing section 25 sends the data 100, the data 71 and the data 61 to the processing module (1) 26 shown in Figure 1. The processing module (1) 26 processes the data 61 according to its pre-loaded program and produces a new data 69. In this example, an encryption program is pre-installed in the processing module (1) 26. The processing module (1) 26 thus replaces the data 57 with the data 67 as shown in Figure 7. In addition, the processing module (1) 26 replaces the value of the data 62 by the value of the data 65 that corresponds to data 62 plus one. In Figure 6C, the value of the data 63 and the value of the data 64 are the same as the value of the data 53 and the value of the data 54 respectively. Then, the processing module (1) 26 sends the data 100, the data 70 and the data 69 back to the routing section 25.

The routing section 25 thus receives the data 100, the data 70 and the data 69 that are depicted in Figure 6C. The procedure is again repeated and this time, the values of the number data 63 and the executed processing number data 65 are the same. Therefore, the routing section 25 sends the data 100, the data 70 and the data 69 to the receiver 4 through the external network by way of the output port 30.

From the foregoing it will be understood that the user can perform programmable multiple processing on the sender side. Furthermore, the user can select different multiple processing operations whenever data is sent by selecting the process data (P). This can be set by the user independently of other factors such as the route that the data is to follow through the network e.g. specified by the routing header data 100. The order of the processing of the multiple processes is determined by the order data (O), from which the order is determined depending on the processes stipulated in the process data (P) .

The receiver side will now be described in more detail with reference to Figures 8, 9 and 10.

The receiver side includes a receiver side network node 3 connected to the network and also a receiver 4 shown schematically. The network node 3 is composed of an input port 39, a request analysis section 31, an order decision section 32, a database (C) 33, an internal header control section 34, a routing section 35, inverse processing modules (1, 3 --) 36, 37 and an output port 38.

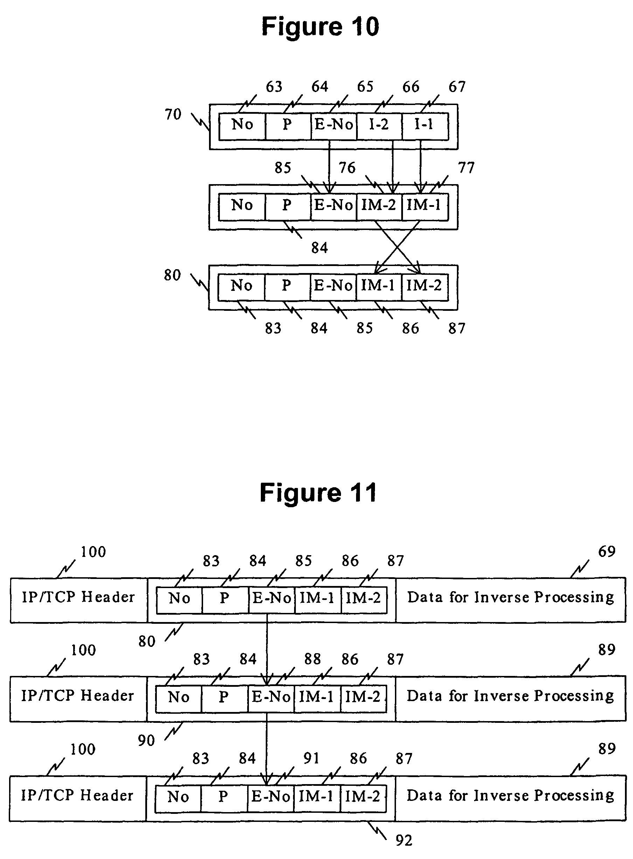

The network node 3 thus receives the data 100, the data 70 and the data 69 sent by the network node 2, at the input port section 39. The request analysis section 31 extracts the data 70 that is shown in Figure 10 for inverse processing from the receiving data and transmits it to order decision section 32. The order decision section 32 replaces the data 65 by data 85 that is zero. Then the order decision section 32 replaces the data 66 and the data 67 by the data 76 and the data 77 by referring to the database (C) 33 that is shown Figure 9. The contents of this database are pre-stored from the service provider 6. In addition, the service provider 6 may update the database (C) when a new service is installed in the system.

Then, the order decision section 32 checks the data 84, which is the same as data 64. If the data 84 signifies a combination, the places of the data 76 and the data 77 are not changed. However, if the data 84 signifies a permutation, the places of data 76 and data 77 are reversed. In other words, the data 86 is replaced by the data 77 and the data 87 is replaced by the data 76. The values of the data 83 and 84 are the same as the data 63 and 64 respectively. Next, the order decision section 32 sends the new header data 80 to the internal header control section 34, which also receives the data 100, the data 70 and the data 69 from the request analysis section 31. Then the internal header control section 34 replaces the data 70 in Figure 6 by the data 80 of Figure 10. After that, the internal header control section 34 transmits the data 100, the data 80 and the data 69 to the routing section 35.

The routing section 35 receives the data 100, the data 80 and the data 69 shown in Figure 11. The routing section 35 initially compares the values of the number data 83 and the executed inverse processing number data 85. If the values are both the same, the routing section 35 sends the data 100 and the data 69 to the receiver 4 by way of the output port 38 after deleting the data 80. If the values are different, the routing section 35 calculates the difference between the value of the data 83 and the value of the data 85, which indicates the number of inverse processes that need to be executed. Then the routing section 35 calculates the value of the data 85 plus one. This points to data corresponding to the next inverse processing module port. Then the routing section 35 checks the data that is pointed to by the data 85 plus one. Initially, since the value of the data 85 equals zero, the value of the data 85 plus one, is one. Therefore, the routing section 35 first checks data 86 from the data 85. The value of the data 86 at this time corresponds to the inverse processing module port (1). Therefore, the routing section 35 sends the data 100, the data 80 and the data 69 to the inverse processing module (1) 36 shown in Figure 8. The inverse processing module (1) 36 processes the data 69 in accordance with its pre-defined inverse program and produces new data 89. In this example, an inverse encryption or decryption program is installed in the inverse processing module (1) 36, the program having been downloaded from the service provider 6. The inverse processing module (1) 36 replaces the data 85 by the data 88, i.e. the data 85 plus one. After that, the inverse processing module (1) 36 sends the data 100, the data 90 and the data 89 back to the routing section 35.

The routing section 35 then receives the data 100, the data 90 and the data 89 shown in Figure 11. Then the process is repeated, namely, the routing section 35 compares the values of the number data 83 and the executed inverse processing number data 88. If the both values are the same, the routing section 35 sends the data 100 and the data 89 to the receiver 4 by way of the output port 38 after deleting the data 90. If the values are different, the routing section 35 calculates the difference between the value of the data 83 and the value of the data 88, which indicates the number of further inverse processes that need to be executed. Then the routing section 35 calculates the value of the data 88 plus one. This points to data corresponding to the next inverse processing module port. Then the routing section 35 checks the data that is pointed to by the data 88 plus one. Since the value of the data 88 equals to one, the value of the data 88 plus one is two. Therefore the routing section 35 checks second data 87 from the field of the data 88. The value of the data 87 at this time corresponds to the inverse processing module port (2). From Figure 9, it can be seen that the value of the inverse processing module port (2) is zero, as indicated in row 76. This zero means that there is no need to execute the inverse processing. Actually, there isn't a inverse virus check program. In that case, the routing section 35 replaces the data 88 by the data 91 that is the data 88 plus one.

After that, the routing section 35 again compares the values of the number data 83 and the executed inverse processing number data 91. This time, the values of both the number data 83 and the executed inverse processing number data 91 are the same. Since the both values are the same, the routing section 35 sends the data 100 and the data 89 to the receiver 4 by way of the output port 38, after deleting the data 92.

As described the above, the routing section 35 compares the value of the number data such as the data 83 and the executed inverse processing number data such as the data 91, and if the both values are the same, sends the data 100 and the inverse processed data such as the data 89 to the receiver after deleting the header data such as the data 92. If the both values are not the same, the routing section 35 sends the data 100, the header data such as the data 92 and any current inverse processed data such as the data 89, to the proper inverse processing module. At this time, if the value of the data that points out the place of the inverse processing module port such as the data 87 is zero, the routing section 35 doesn't send the data 100, the header data 90 and the data for inverse processing such as 89, to the inverse processing module. In addition, the routing section 35 replaces the executed inverse processing number data such as the data 88 by the data 91 that is the data 88 plus one. These procedures are repeated until both values, namely the value of the number data such as the data 83 and the executed inverse processing number data such as the data 91, become the same.

From the foregoing, it will be understood that the nodes 2, 3 can be selectively loaded with multiple programs to execute individual processes and their inverse, and the programs can be changed by downloading new or replacement programs from the service provider 6. Furthermore, the user 5 can select the multiple processes to be performed on data and their order of execution.

### Second embodiment

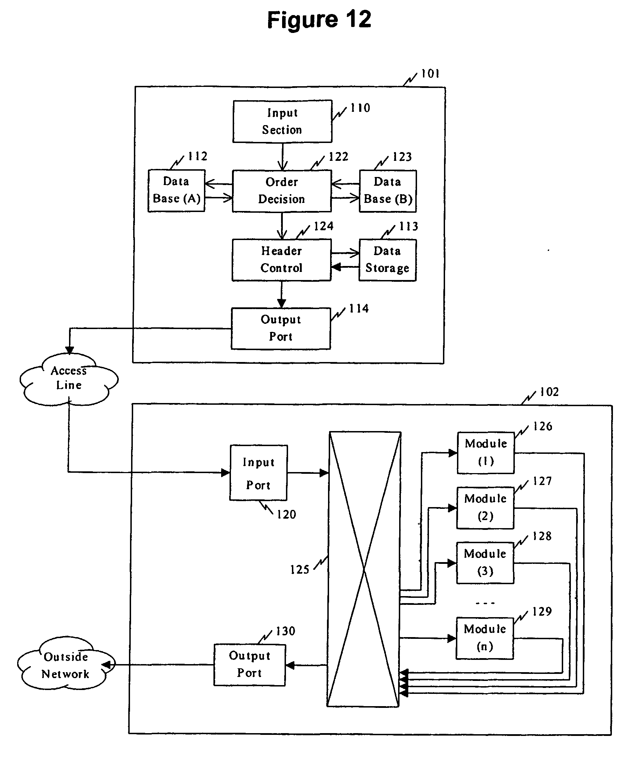

Figure 12 is a block diagram of a second implementation the sender side of a programmable multiple processing system, which comprises a user terminal 101 and a network node 102 interconnected by way of access line such as an IP network. The node 102 is also connected to an outside network such as an IP network, in order to provide a connection to the receiver side, to be described hereinafter.

The user terminal 101 is comprises an input section 110, an order decision section 122, a database (A) 112, a database (B) 123, a header control section 124, a data storage section 113 and an output port 114. The contents of the database (A) 112 are as shown in Figure 2 and the contents of the database (B) 123 are as shown in Figure 4. The network node 102 comprises an input port 120, a routing section 125, processing modules (1-n) 126-129 and an output port 130.

Operation of the sender side system will now be described in detail. Firstly, a user operates the input section 110 in order to define the data to be sent to a receiver 4 and the multiple processing to be executed. The multiple processing is carried out at the network node 102. An example in which the user selects an encryption and virus check as multiple processing will be considered. After receiving information that the user has selected the data and the multiple processing, the order decision section 122 checks the processing codes for the selected multiple processing from the database (A) 112. The database (A) 112 contains the same data as database (A) 12 shown in Figure 2. The data of database (A) 112 is stored before starting this system. The user has selected encryption and virus checking for the multiple processing, and so the corresponding processing codes are P-1 and P-2 respectively, as set out in the database (A) 112 shown in Figure 2. Then the order decision section 122 produces the draft header data 41 for multiple processing that was previously described with reference to Figure 5. The draft header data 41 is composed of number data 43, a permutation/combination data 44, an executed processing number data 45 and multiple processing code data 46, 47 as described previously. The operation of order decision in the order decision section 122 corresponds to the operation of order decision section 22 of the first embodiment such that header data 51 is created from the draft header data 41 by reference to the database (B) 123 of Figure 12, which contains the same data as the database (B) 23 of Figure 4.

Then, the order decision section 122 sends the data 51 to the header control section 124. In addition, the data that is to be sent to a receiver 4 is also sent to the header control section 124 by the order decision section 122. The header control section 124 reads the data to be sent to the receiver, from the data storage section 113. The data in the data storage section is stored before starting this operational process. Then the header control section 124 assembles a data package that comprises the data 100, the data 51 and the data 42, that is depicted in Figure 6A. After that, the header control section 124 sends the data 100, the data 51 and the data 42 to the network node 102 by way of the output port 114.

The network node 102 receives this data by way of the input port section 120 and the data is forwarded to the routing section 125. The operation of the sections 125, 126, 127, 128, 129 and 130 are the same as the operation of sections 25, 26, 27, 28, 29 and 30 of Figure 1. The operations performed by those sections are described with reference to Figure 6 and therefore a detailed description of the operation of the sections 125, 126, 127, 128, 129 and 130 is omitted.

The operation of the receiver side is the same of the node 3 and the receiver 4 described previously in relation to the first embodiment.

The main difference between the first and second embodiments is the location of the order decision section and the database (B). In the first embodiment, the network node 2 decides the order of multiple processing, by referring to the database (B) 23. On the other hand, in the second implementation, the user terminal 101 decides the order of multiple processing by referring to the database (B) 123. If the service provider 6 installs a new process into a module of the network node, in the case of the first embodiment, the service provider need only update the database (B) 23. In the second embodiment, the service provider must update the individual databases (B) 123 that are stored in each user terminal.

### Third embodiment.

In the third embodiment, the network node receives not only data that is to be subjected to multiple processing, but also data that does not require multiple processing.

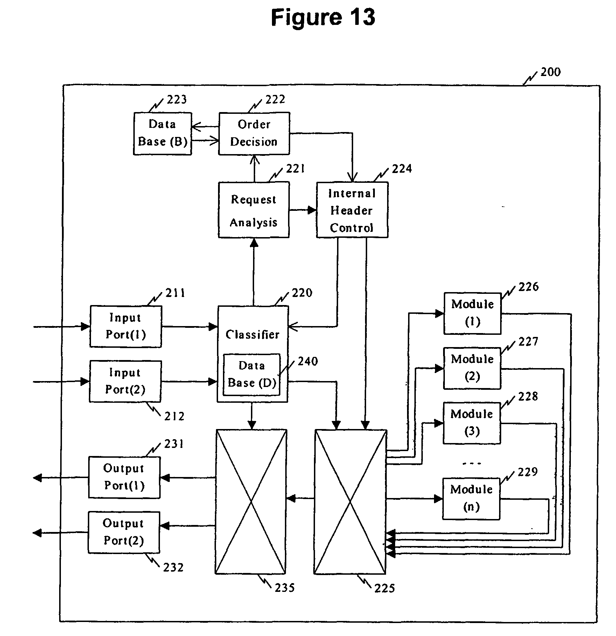

Referring to Figure 13, this shows another implementation of the network node 2, which is referenced 200. The node 200 is connected to a user terminal 1 (not shown in Fig. 13) in the manner described previously with reference to Figure 1. The network node 200 comprises input port sections (1-2) 211-212, an classifier section 220 that contains a database (D) 240, a request analysis section 221, an order decision section 222, database (B) 223, an internal header control section 224, a routing section 225, processing modules (1-n) 226-229, a routing section 235 and output ports (1-2) 231-232.

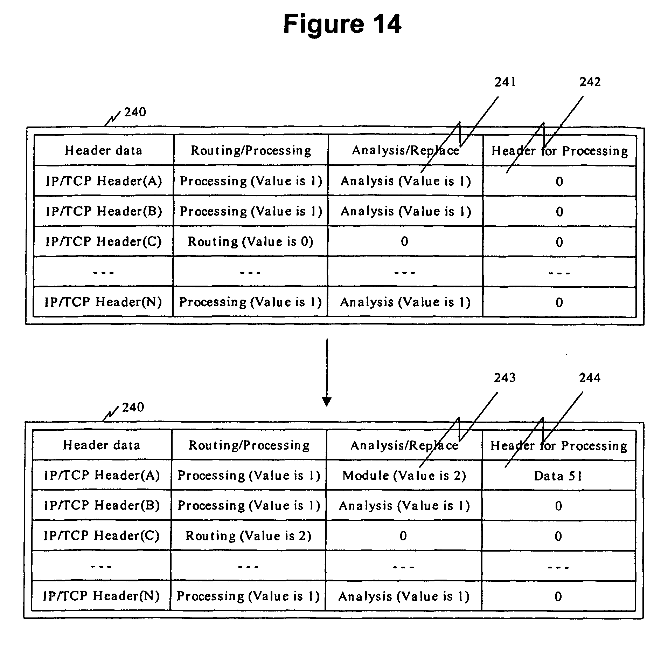

Figure 14 shows the contents of the database (D) 240 that is shown in Figure 13. The database (D) 240 has four columns. Starting from the left hand side, the first column is a list of IP/TCP Headers. The second column contains requests for processing or routing that are assigned to each IP/TCP Header data, in which the value one is corresponds to a request for data processing and the value zero corresponds to a request for data routing. The third column contains information for requesting analysis or replacing the header data for multiple processing. The value one is assigned to every line that that includes a request for processing but otherwise the value zero is assigned. The fourth column contains data for replacement of the header data for multiple processing. Default data 240 is stored before starting the system.

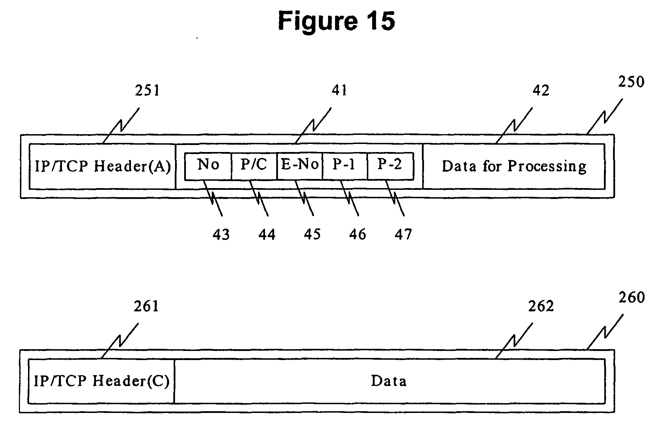

Figure 15 shows the format of the data that is sent to the network node 200 from the user terminal 1. Data in the format 250 is for multiple processing whereas data in the format 260 is just for routing.

Operation of the network node 200 will now be described. Initially, the network node 200 receives the data by way of the input port (1) 211 or the input port (2) 212. In this example, the user terminal 1 is connected to the input port (1) 211. Therefore, the network node 200 receives the data 250 or the data 260 shown in Figure 15 by way of the input port (1) 211. The input port (1) sends the received data 250 or 260 to the classifier section 220. The classifier section 220 reads the IP/TCP header data 251 or the data 261 from the received data. Then the classifier section 240 decides to send the received data for routing or processing, by referring the database (D) 240 shown in Figure 14. The default data of the database (D) 240 is stored before starting.

If the classifier section receives the data 260, it sends the data 260 to the routing section 235. If the classifier section 240 receives the data 250, then it checks the data field 241. If the data 241 is equal to one, the classifier section 220 sends the received data 250 to the request analysis section 221. The default value of the data 241 is one. If the data 243 is equal to two, the classifier section 220 replaces the data 41 shown in Figure 15 by the data 51 shown in Figure 5, as explained in more detail hereinafter. Then classifier section 220 sends the data 251, the data 51 and the data 42 to the routing section 225. The operation of the sections 221, 222 and 223 is the same the sections 21, 22 and 23 respectively. Therefore detailed explanations of the operation of these sections are omitted.

The internal header control section 224 operates in the same way as the section 24, but in addition, once the internal header control section 224 makes the header data 51 for multiple processing, the section 224 renews the database (D) 240. An example of this renewing operation is shown in Figure 14. The internal header control section 224 changes the data 241 and the data 242 after making the header data 51 for multiple processing. Namely, the data 241 is replaced by the data 243 that means to send the received data to the routing section 225 directly after replacing the header data 41 by the data 51. The value of the data 243 is two. In addition, the data 242 is replaced by the data 244, namely the data for replacing the header data 41. The data 244 is the same as the data 51. The processing modules (1-n) 226-229 operate in the same way as the processing modules (1-n) 26-29 described with reference to Figure 1. The routing section 225 has almost same as the operation of the routing section 25 but with the difference that when the multiple processing is completed the routing section 225 sends data to another routing section 235 rather than to the output port. The routing section 235 sends the data that is received from the classifier section 220 or the routing section 225 to an appropriate output port (1-2) 231-232 based on the IP/TCP header 251 data 261.

According to this implementation, the request for multiple processing by a user is analysed only for the first data packet. Then an internal header data for multiple processing is produced and stored. Therefore after storing the internal header data for multiple processing, the request is not analysed but the request is replaced by the stored internal header data and multiple processing is executed based on the stored internal header data.

### Fourth embodiment

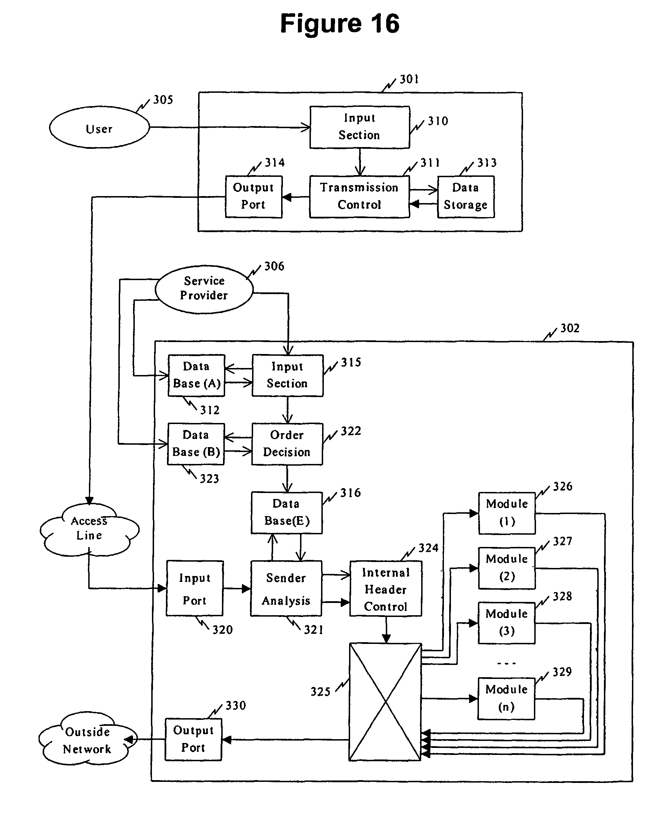

A fourth embodiment is shown in Figures 16, 17 and 18. In this implementation, a user doesn't send the data that requests multiple processing each time that data is sent to the receiver side. Instead, the user registers a multiple processing regime that is executed on the data that the user sends.

The sender side of programmable multiple processing's system is shown in Figure 16 and comprises a user terminal 301 connected to a network node 302 by way of access line such as an IP network. In addition, the node 302 is connected to an outside network such as the IP network.

The user terminal 301 comprises an input section 310, a transmission control section 311, a data storage section 313 and an output port 314. The network node 302 comprises an input port 320, a sender analysis section 321, a database (E) 316, an order decision section 322, database (B) 323, an input section 315, database (A) 312, an internal header control section 324, a routing section 325, processing modules (1-n) 326-329 and an output port 330.

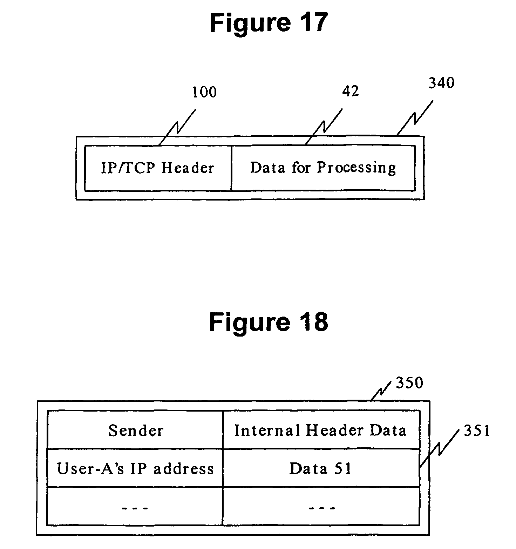

Before starting to send data with this system, a user 305 registers with service provider 306 for multiple processing. Then the user 305 selects the data to be sent through the network to a receiver by the input section 310. For example, the user 305 may select encryption and virus checking as the multiple processing. The transmission control section 311 accesses the data storage section 313 to read the data that the user wants to send to the receiver. After reading the data to be sent, the transmission control section 311 assembles data package 340 that is shown in Figure 17. The data 340 comprises an IP/TCP header data 100 and data 42 for being processed. Then the transmission control section 311 sends data package 340 as IP packet data to the output port section 314.

The operation of network node 302 will now be described in detail. Initially, the service provider 306 inputs registration data to the network node 302 through the input section 315. The registration data consists of information concerning the individual multiple processing that a user 305 requested during the aforementioned registration with the service provider, together with an IP address for the user 305. The input section 315 checks the processing code for the multiple processing that the user 305 selects, from the database (A) 312 and produces draft header data 41 for executing the multiple processing. The contents of the database (A) 312 are stored before starting the system by the service provider 306. In addition, the data of the database (A) is updated when the service provider installs a new process into the system. Then the input section 315 sends the draft header data 41 and the user's IP address to the order decision section 322. The operation of the order decision section 322 is almost same as the operation of the order decision section 22. The order decision section 322 decides the order of multiple processing from the received draft header data 41 by referring the database (B) 323 and makes the header data 51. The contents of the database (B) 323 are the same as the database (B) 23 and are stored before starting. The service provider 306 also updates the contents of the database (B) 323 when a new process is installed into the system. Then the operation of making the data 51 from the data 41 is carried out in the order decision section 22 as previously described. Then the order decision section 322 stores the header data 51 in the database (E) 316, in association with the user's IP address. An example of the contents of database (E) 316 comprises data 350 shown in Figure 18. This shows the data 51 in association with the user-A's IP address.

The input port 320 of the node 302 receives the IP packet data that are sent from the output port 314 of the user terminal 301. The input port 320 forwards the received data to the sender analysis section 321. The sender analysis section 321 extracts the sender's IP address to provide user information corresponding to the sender of the data. Then the sender analysis section 321 sends the user's IP address to the database (E) 316 and gets the header data for the multiple processing for the particular user. In this example, the user is user-A. Therefore the header data for the user-A is the data 351. The data 351 is the same data 51. After that, the sender analysis section 321 transmits the received data 340 and the header data 51 to the internal header control section 324. The internal header data control section 324 assembles the data 100, the data 51 and the data 42 as shown in Figure 6. Then the internal header control section 324 transmits the data 100, the data 51 and the data 42 to the routing section 325.

The routing section 325, multiple processing module (1-n) 326-329 and the output port 330 operate in the same way as the routing section 25, multiple processing module (1-n) 26-29 and the output port 30 respectively.

The node 3 and receiver 4 shown in Figure 8 are used on the receiver side in this embodiment.

According to this implementation, the user makes a contract with a service provider so that particular types of processing can be executed on the user's data. In this case the user does not need to select multiple processing requests whenever data is sent.

### Fifth embodiment

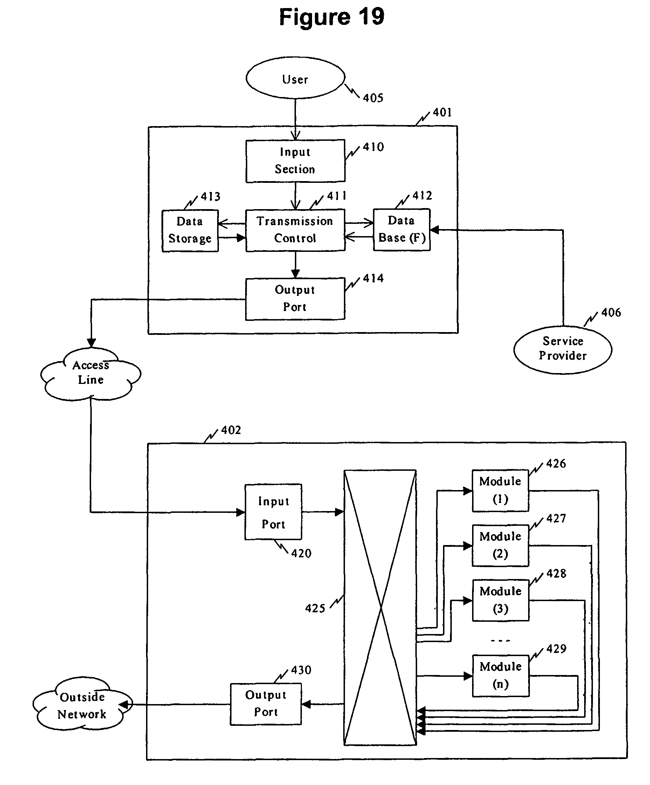

In the first embodiment of Figure 1, the execution order of the multiple processing is chosen automatically on the basis of information held in a database. Therefore, a user does not need to define the order for the multiple processing. In the fifth embodiment, multiple processing is executed in an order requested by the user, according to data sent in the transmitted data. In other words, the multiple processing is executed in the order that the user selects. The fifth embodiment will now be described with reference to Figures 19 to 23.

The sender side of programmable multiple processing system of the fifth embodiment comprises user terminal 401 and network node 402. The user terminal 401 is connected to the network node 402 by way of an access line such as an IP network. In addition, the network node 402 is connected to an outside network such as an IP network. The user terminal 401 is composed of an input section 410, a transmission control section 411, database (F) 412, a data storage section 413 and an output port 414. The network node 402 is composed of an input section 420, a routing section 425 processing modules (1-n) 426-429 and an output port 430.

Initially, a user 405 uses the input section 410 to select data to be sent to a receiver. The user 405 also uses the input section 410 to select multiple processing, including the order that the user wants to apply the selected, individual, multiple processes to the data. In this example, the user 405 selects a virus check and encryption, in this order, for the multiple processing.

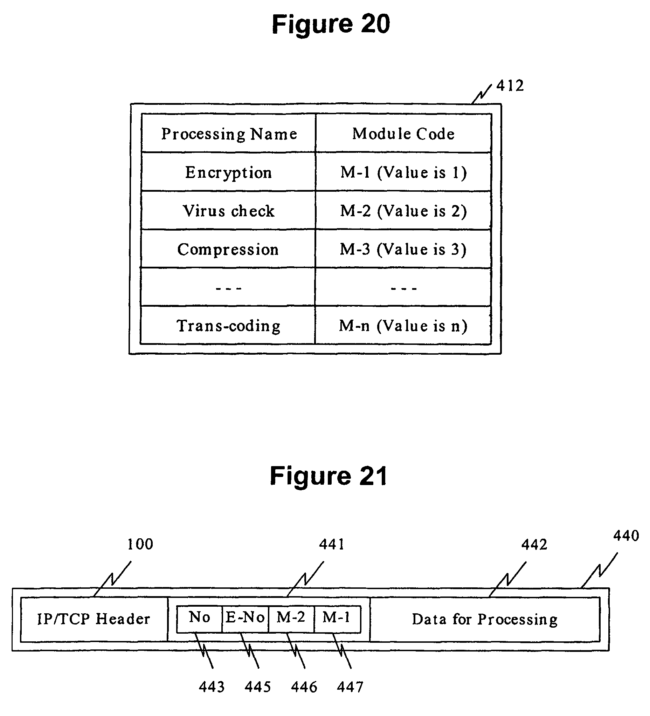

After receiving information that the user 405 selects data for sending and multiple processing, the transmission control section 411 checks the module port codes for the multiple processing that the user 405 selects from a database (F) 412 that is shown in Figure 20. The module port code M is an identifier for identifying a processing module for executing specified processing at the node 402. The data of database (F) 412 is stored before starting, by a service provider 406. In addition, the database (F) 412 may be updated when the service provider installs a new service. Since the user 405 has selected the virus check and the encryption as the multiple processing in this order, the module port codes are M-2 and M-1 respectively from the database (F) 412. The value of M-2 and M-1 equal to two and one respectively.

Then the transmission control section 411 accesses the data storage section 413 in order to read the data that the user 405 wants to send. The user 405 stores this data in the data storage section 413 before starting the system. After reading the data that is for being processed, the transmission control section 411 assembles a data package 440 that is shown in Figure 21. The data package 440 comprises an IP/TCP header 100, header data for multiple processing 441 and data 442 to be processed. In detail, the IP/TCP header data includes an IP address of a sender, an IP address of a receiver, a port number of a sender and a port number of a receiver. In addition, the header data for multiple processing 441 consists of number data 443, executed processing number data 445 and multiple module port code data 446, 447. The number data 443 comprises one byte and corresponds to the number of processing requests made by the user. In this example, the user 405 has selected two processing executions, the virus check and encryption, and therefore this number field has a value of two. The executed processing number 445 data comprises one byte and shows how many processing executions have been made. At this moment, as none of processing has been executed, the data 445 has a value of zero. This data value will be changed after each processing execution by one of the processing modules. Each processing request data comprises one byte. In this example, since the value of the number data 443 is two, there are two processing request data. The value of this data is decided by reference to the database (F) shown in Figure 20, from which it can be seen that because the user 405 has selected the virus check and the encryption, the data 446 and the data 447 have a value of two and one respectively. The transmission control section 411 sends the data package 440 as an IP packet data to the output port 414 for transmission to the network node 402.

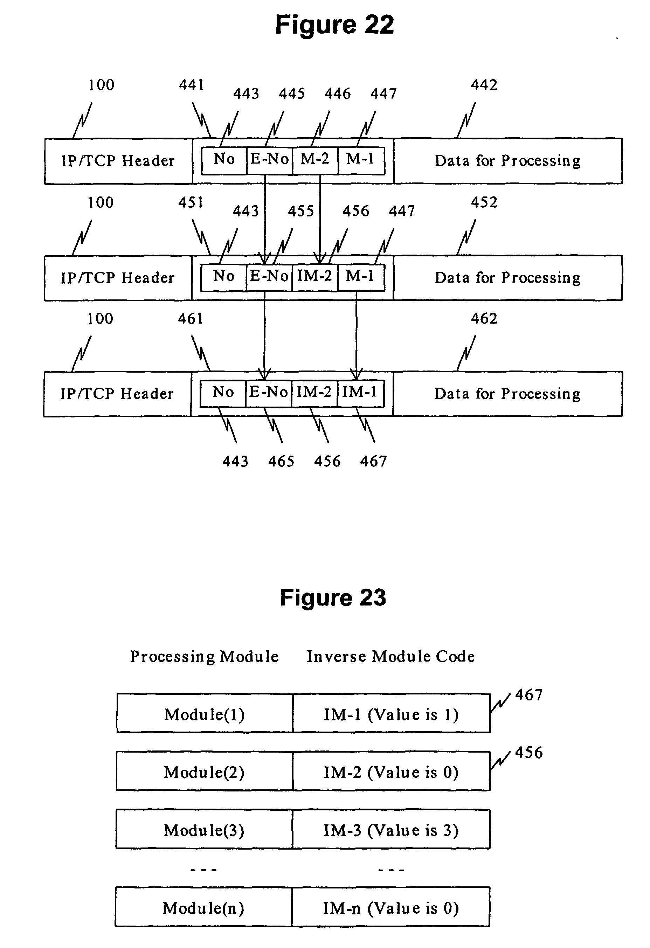

The input port 420 of the node 402 forwards the data package to the routing section 425. The routing section 425 receives the data 100, the data 441 and the data 442 shown in Figure 22. Initially, the routing section 425 compares the values of the number data 443 and the executed processing number data 445. If the values are the same, the routing section 425 sends the data 100, the data 441 and the data 442 to a receiver by way of the output port 430. If the values are different, the routing section 425 calculates the value of the data 445 plus one. This signifies the location of information corresponding to the next processing module port. Then the routing section 425 checks the data that is pointed out by the data 445 plus one. For example, if the value of the data 445 plus one is equal to one, the routing section 425 checks first data 446 from the data 445. Then the routing section 425 sends the data 100, the data 441 and the data 442 to the proper processing module that is pointed to by the module port code 446. In this example, initially, the value of the executed processing data 445 is equal to zero. Therefore, the value of the data 445 plus one, is equal to one. Thus the routing section 425 checks the value of the module port code 446. In this case, the value of the data 446 corresponds to the module port two. Therefore the routing section 425 sends the data 100, the data 441 and the data 442 to the processing module (2) 427 shown in Figure 19. The processing module (2) 427 executes the virus check program on the data 442 and produces the data 452. In this system, the processing module (2) 427 has been installed with the virus check program before starting the processing. In addition, the processing module (2) 427 replaces the data 446 by the data 456 as shown in Figure 22. Each processing module has information for executing the inverse processing to the processed data at a receiver side, as shown in Figure 23. Furthermore, the processing module (2) 427 replaces the value of the data 445 by the value of the data 455, that is the data 445 plus one. Then, the processing module (2) 427 sends the data 100, the data 451 and the data 452 to the routing section 425.

The routing section 425 thus receives the data 100, the data 451 and the data 452 that are depicted in Figure 22. At this time, procedure is repeated on the newly created data. More particularly, the routing section 425 compares the values of the number data 443 and the executed processing number data 455. If both the values are the same, the routing section 425 sends the data 100, the data 451 and the data 452 to a receiver by way of the output port 430. If the values are different, the routing section 425 calculates the value of the data 455 plus one. This points to information corresponding to the next processing module port. Then the routing section 425 checks the data that is pointed to by the data 455 plus one. At this time, the value of the executed processing data 455 is equal to one. Therefore, the value of the data 455 plus one is equal to two. Then the routing section 425 checks the value of the module port code 447. In this case, the value of the data 447 means the module port one. Therefore, the routing section 425 sends the data 100, the data 451 and the data 452 to the processing module (1) 426 shown on Figure 19. The processing module (1) 426 executes the encryption program on the data 452 and produces the data 462. In this system, the processing module (1) 426 has been previously installed with the encryption program. In addition, the processing module (1) 426 replaces the data 447 by the data 467 as shown in Figure 22. Also, as shown Figure 23, each processing module has information for executing the inverse processing to the processed data at a receiver side. Furthermore, the processing module (1) 426 replaces the value of the data 455 by the value of the data 465, that is the data 455 plus one. Then the processing module (1) 426 sends the data 100, the data 461 and the data 462 to the routing section 425.

The routing section 425 thus receives the data 100, the data 461 and the data 462 that are shown in Figure 22. The routing section 425 compares the values of the number data 443 and the executed processing number data 465. At this time, the values of the number data 443 and the executed processing number data 465 are both the same. Therefore the routing section 425 sends the data 100, the data 461 and the data 462 to a receiver by way of the output port section 430.

Thus, as described the above, these procedures are repeated until the value of the number data such as the data 443 and the executed processing number data such as the data 465, become the same.

Thus, according to the fifth embodiment, the user can select multiple processing whenever the user sends the data. In addition, the user can select the order of execution of the multiple processing.

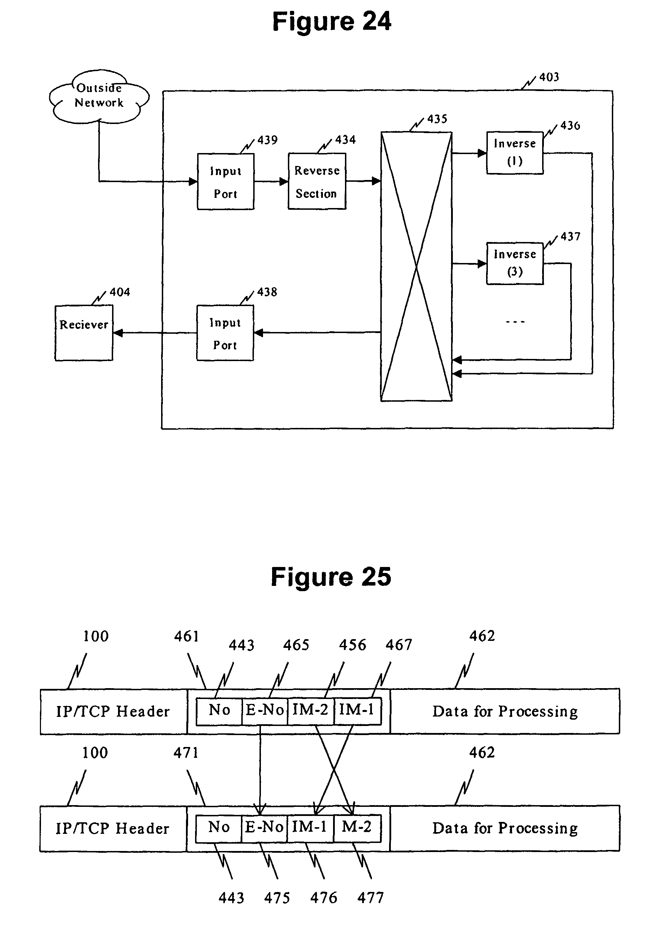

The receiver side of the fifth embodiment will now be described with reference to Figures 24, 25 and 26. Referring to Figure 24, a receiver side network node 403 is connected to the network and provides data to a receiver terminal 404 shown schematically. The network node 403 comprises an input port 439, a reverse section 434, a routing section 435, inverse processing modules (1, 3 - -) 436, 437 and an output port 438. The input port section 439 receives the data 100, the data 461 and the data 462 from the sender side through the IP network. The input port section 439 forwards the data 100, the data 461 and the data 462 to the routing section 435. The reverse section receives the data 100, the data 461 and the data 462 that are depicted in the figure 25. Since the network node 402 of the sender side executes multiple processing, the network node 403 must execute inverse multiple processing before transmitting the received data to a receiver. For example, if the node 402 executes encryption processing, the receiver 404 cannot use the received data without inverse encryption processing. In addition, if there is a particular order in which the multiple processing was executed, the inverse processing should be executed in a corresponding reverse order. Therefore the reverse section 434 changes the order of multiple inverse processing requests that are signified by the data 456 and the data 467. As shown in Figure 25, the data 476 is replaced by the data 467 and the data 477 is replaced by the data 456 at the reverse section 434. In addition, the reverse section 434 replaces the data 465 by the data 475, i.e. a value of zero. Then the reverse section 434 transmits the data 100, the data 471 and the data 462 to the routing section 435.

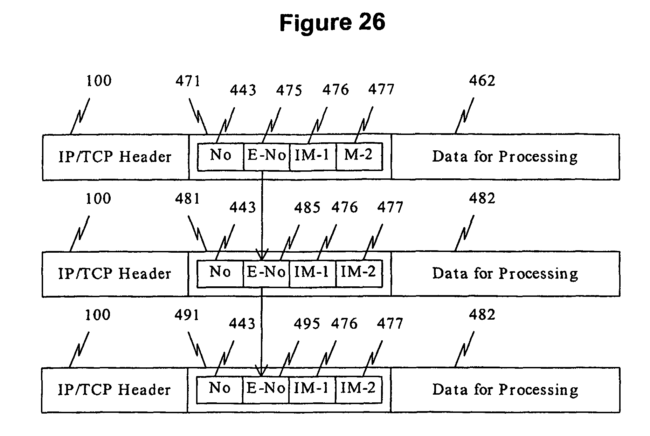

The routing section 435 thus receives the data 100, the data 471 and the data 462 shown in Figure 26. The routing section 435 compares the values of the number data 443 and the executed inverse processing number data 475. If the values are both the same, the routing section 435 sends the data 100 and the data 462 to the receiver by way of the output port 438, after deleting the data 471. If the values are different, the routing section 435 calculates the value of the data 475 plus one. This points to information that signifies the next inverse processing module port. Then, the routing section 435 checks the data that is pointed to by the data 475 plus one. Initially, since the value of the data 475 equals to zero, the value of the data 475 plus one, is one. Therefore the routing section 435 checks first data 476 from the data 475. At this time, the value of the data 476 signifies the inverse processing module port one. Therefore the routing section 435 sends the data 100, the data 471 and the data 462 to the inverse processing module (1) 436 shown in Figure 24. The inverse processing module (1) 436 processes the data 462 according to the pre-defined inverse program and produces a new data 482. In this system, the inverse processing module (1) 436 is pre-installed with an inverse encryption program. For example, a service provider may install the inverse encryption program. Then the inverse processing module (1) 436 replaces the data 475 by the data 485 i.e. the data 475 plus one to signify that one inverse processing has been executed. After that, the inverse processing module (1) 436 sends the data 100, the data 481 and the data 482 back to the routing section 435.

At this time, the procedure is repeated and the routing section 435 compares the values of the number data 443 and the executed inverse processing number data 485. If the values are both the same, the routing section 435 sends the data 100 and the data 482 to a receiver by way of the output port 438 after deleting the data 481. If the values are different, the routing section 435 calculates the value of the data 485 plus one. This points to information corresponding to the next inverse processing module port. Then the routing section 435 checks the data that is pointed to by the data 485 plus one, from the field of the data 485. Since the value of the data 485 is equal to one, the value of the data 485 plus one is two. Therefore the routing section 435 checks second data 477 from the field of the data 485. At this time, the value of the data 477 signifies the inverse processing module port two. But the value of the inverse processing module port two is zero. This zero means that there is no need to execute the inverse processing because there is no an inverse virus check program. In that case, the routing section 435 replaces the data 485 by the data 495 i.e. the data 485 plus one. After that, the routing section 435 again compares the values of the number data 443 and the executed inverse processing number data 495. Now, the values of the number data 443 and the executed inverse processing number data 495 are both the same. Therefore, the routing section 435 sends the data 100 and the data 482 to a receiver through the output port 438 after deleting the data 491.

These procedures are repeated until the value of the number data such as the data 443 and the executed inverse processing number data such as the data 495, become the same. When this happens, the data 100 and the data 482 are sent to a receiver by way of the output port 438 after deleting the data 491.

### Sixth embodiment

In this embodiment, the order in which the multiple processing is executed is selected on the basis of a user's request or a database (H) supplied by a service provider.

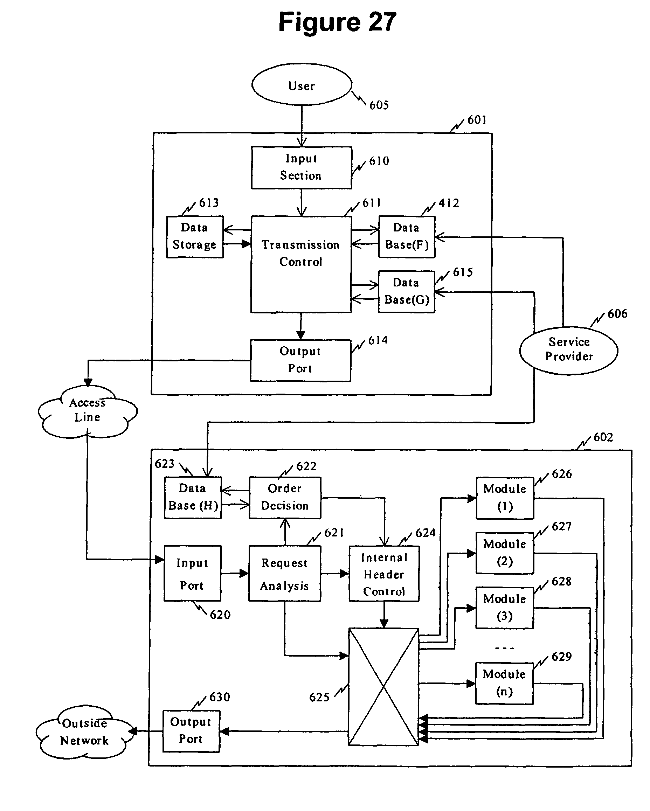

The sender side of programmable multiple processing system is shown in Figure 27 and comprises a user terminal 601 and a network node 602. A service provider 606 communicates with the terminal 601 and the node 602. The user terminal 601 includes an input section 610, a transmission control section 611, a data storage section 613, a database (F) 412, a database (G) 615 and an output port section 614. The network node 602 comprises an input port 620, a request analysis section 621, an order decision section 622, a database (H) 623, an internal header control section 624, a routing section 625, processing modules (1-n) 626-629 and an output port 630.

Initially, a user 605 operates the input section 610 so as to select data to be sent to a receiver, multiple processing to be performed on the data, and also a procedure of how to decide the order for executing multiple processing. This will be explained by an example in which the user 605 selects a virus check and encryption for multiple processing in this order.

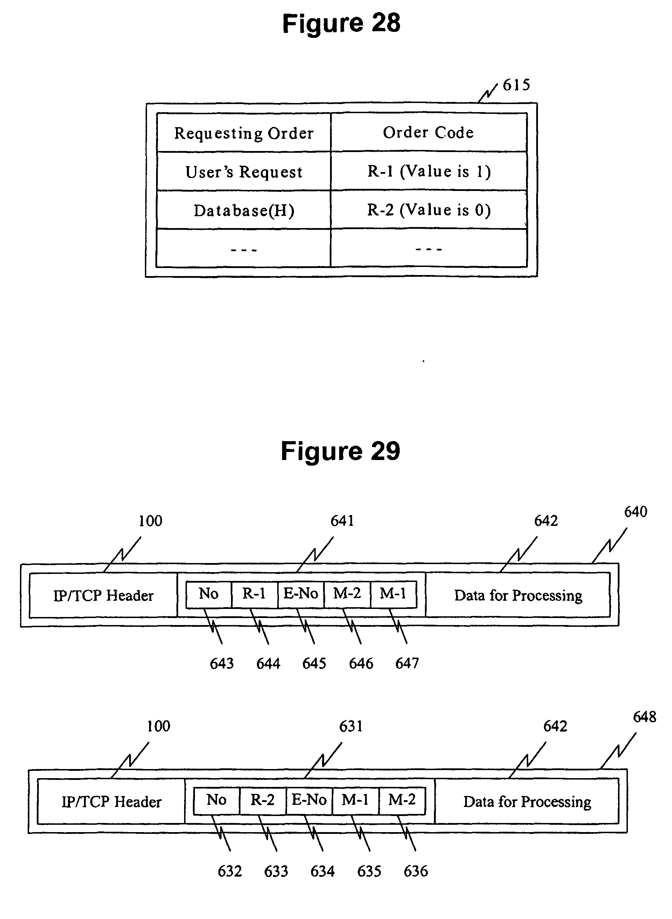

After receiving information that the user 605 has selected data for sending, and the multiple processes to be executed, the transmission control section 611 checks the module port codes for the selected multiple processing from the database (F) 412 that is depicted in Figure 20. The module port code is an identifier for identifying a processing module for executing specified processing at the node 602. The data of database (F) 412 is stored before starting the system by a service provider 606. In addition, the database (F) 412 is updated when the service provider installs a new service. Because the user 605 has selected the virus check and the encryption for the multiple processing, the module port codes are determined to be M-2 and M-1 respectively from the database (F) 412. The values of M-2 and M-1 are equal to two and one respectively. Then, the transmission control section 611 refers to the database (G) that is shown in Figure 28, for choosing an order code corresponding to the order in which the multiple processes are to be executed. The service provider 606 downloads the data for the database (G) 615 before starting the system. In this example, the user 605 selects the order of executing multiple processing based on the user's request. Therefore, the order code R-1 is selected by reference to the database (G) 615.

Also, the transmission control section 611 accesses the data storage section 613 in order to read the data that the user 605 wants to send to a receiver after being processed. The user 605 stores the data of the data storage section 613 before starting. After reading this data, the transmission control section 611 assembles the data package 640 shown in Figure 29A. The data package 640 comprises IP/TCP header data 100, multiple processing header data 641 and data 642 for being processed.

In detail, the multiple processing header data 641 is comprised of number data 643, order code data 644, an executed processing number data 645 and multiple module port code data 646, 647. The number data 643 comprises one byte and indicates how many processing operations have been requested. In this example, the user 605 has selected two processing operations, namely the virus check and the encryption, and therefore this number field is given a value of two. The order code data 644 comprises one byte and indicates how to decide the order for executing multiple processing. In this example, the user 605 selected the order, and so the order code data 644 comprises the code R-1. The executed processing number 645 comprises one data byte and indicates how many processing operations have been executed. At this stage, none of the processing has been executed and so the data 645 is set to zero. This data value will be incremented after each processing executed by one of the processing modules 626-629. The number data 643 corresponds to the number of processing request data such as 646 and 647. Each processing request data has comprises one byte. In this case, there are two processing request data, and so the value of the number data is two. The individual values of the processing request data are chosen by reference to the database (F). As the user 605 selected the virus check and the encryption for the multiple processing, the data 646 and the data 647 are set to values two and one respectively.

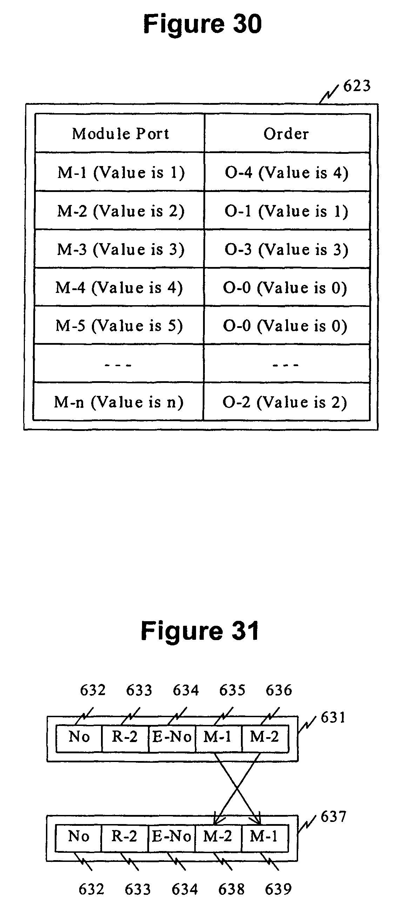

Then, the transmission control section 611 sends each data package 640 as IP packet data through output port 614 to the input port section 620 of the network node 602 from which it is forwarded to the request analysis section 621. Initially, the request analysis section 621 checks the data 644. If the data 644 is an order code R-1 i.e. that has a value of one, the request analysis section 621 transmits the data 640 to the routing section 625. Alternatively, if the data package is configured as shown in Figure 29B in which the data 633 corresponds to the order code R-2 that has a value of zero, the request analysis section 621 transmits the header data 631 to the order decision section 622 and transmits the data 648 to the internal header control section 624. After receiving the data 631, the order decision section 622 refers to the database (H) 623 for deciding an order for executing the multiple processing. The database (H) 623 is shown in Figure 30 and contains data corresponding to the order in which the processing modules 626 - 629 should execute the individual processes. The order decision section 622 receives module port data 635 of value two, together with module port data 636 of value one, shown in Figure 31. According to the database (H) 623, the order of the data 635 is O-4 that has a value of four, and the order of the data 636 is O-1 that has a value of one. The order decision section 622 rearranges these data in descending order i.e. with the highest value first, and so it replaces the data 638 by the data 636 and replaces the data 639 by the data 635.

Then, the order decision section 622 transmits the resulting data 637 to the internal header control section 624. The internal header control section 624 receives the data 637 and the data 648. The internal header control section 624 then replaces the data 631 in the data 648 shown in Figure 29B by the data 637. After that, the internal header control section 624 transmits the data 100, the data 637 and the data 642 to the routing section 625. The routing section 625 receives the data 100, the data 637 and the data 642, or the data 640. In this example, the routing section 625 receives the data 640 as shown in detail in Figure 32.

The routing section 625 compares the values of the number data 643 and the executed processing number data 645. If the values are different, the routing section 625 calculates the value of the data 645 plus one. In this example, the value of the executed processing data 645 is equal to zero initially. Therefore, the value of the data 645 plus one is equal to one. Then, the routing section 425 checks the first data field from the data 645. Then the routing section 625 checks the value of the module port code 646. For this example, the value of the data 646 corresponds to the module port two. Therefore, the routing section 625 sends the data 100, the data 641 and the data 642 to the processing module (2) 627 shown in Figure 27. The processing module (2) 627 executes the virus check program on the data 642 and produces the data 652. In addition, the processing module (2) 627 replaces the data 646 by the data 456 that is shown in Figure 23. As shown in Figure 23, each processing module has information for executing the inverse processing to the processed data, at a receiver side. The processing module (2) 627 replaces the value of the data 645 by the value of the data 655 i.e. the data 645 plus one. Then the processing module (2) 627 sends the data 100, the data 651 and the data 652 back to the routing section 625.

The routing section 625 then compares the values of the number data 643 and the executed processing number data 655. As the values of both data are not the same, the routing section 625 calculates the value of the data 655 plus one. As the value of the data 655 plus one, is two, the routing section 625 checks the value of the module port code 647. In this example, the value of the data 647 corresponds to the module port one. Therefore the routing section 625 sends the data 100, the data 651 and the data 652 to the processing module (1) 626 shown in Figure 27. The processing module (1) 626 executes the encryption program on the data 652 and produces the data 662. In addition, the processing module (1) 626 replaces the data 647 by the data 467 as shown in Figure 23. Also, the processing module (1) 626 replaces the value of the data 655 by the value of the data 665 that is the data 655 plus one. Then, the processing module (1) 626 sends the data 100, the data 661 and the data 662 to the routing section 625. The routing section 625 compares the values of the number data 643 and the executed processing number data 665. This time, the values of data are both the same, and so the routing section sends the data 100, the data 661 and the data 662 to a receiver by way of the output port 630.

The components for the receiver side of the sixth embodiment comprise the network node 403 described in relation to the fifth embodiment and shown in Figure 24. In this implementation, the node 403 receives the data 100, the data 661 and the data 662. The difference between the fifth and sixth embodiments is that in the sixth embodiment, the data 644 is additionally included in the data received at the node 403 but this does not alter the way it operates.

## Claims

1. A network node for use in a network to execute multiple processes on network routable data, comprising a plurality of processing modules (26-29; 36,37; 126-129; 226-229; 326-329; 426-429; 436,437; 626-629), and a controller (25; 35; 125; 225; 325; 425; 435; 625) to direct the data to the processing modules selectively to perform sequential multiple processing thereof **characterised in that** the node is operable to detect process code data (P) in the routable data corresponding to user selected processes to be performed by the modules on the data, and operable to provide order data (O) for determining the order in which the user selected processes are to be performed by the processing modules in dependence on the detected process code data (P).

2. A system comprising a network node according to claim 1, an ordering database (B) for containing the order data (O), and an order decision element (22, 32, 122, 222, 322, 622) for determining the order data from the database in dependence on the process codes data (P) in the routable data, and wherein the controller is operable to direct the data to be processed to the processing modules in dependence upon the order data.

3. A system according to claim 2 including a process categorisation database (A) for providing the process code data (P) corresponding to the individual processes selected by the user.

4. A system according to claim 3, wherein the node is configured as a node (2) for use on a sender side of a network, and associated with a sender side user terminal (1; 101; 301; 401; 601) to select the processes to be performed.

5. A system according to claim 4 wherein the ordering database (B) is within the node.

6. A system according to claim 4 wherein the process categorisation database (A) is within the terminal.

7. A system according to claim 4 wherein the database (B) is within the user terminal.

8. A system according to any one of claims 2 to 7 wherein the node (200) is configured to receive routable data to be subject to the multiple processing together with routable data for which no multiple processing is requested, and including a classification database (D) to contain data for classifying the routable data whereby only the data for which multiple processing is requested, is directed to the processing modules.

9. A system according to any one of claims 2 to 7 wherein the processing modules are configured to provide data corresponding to the inverse (I) of the processes that they execute and associate the inverse data with data that comprises the outcome of their executed process, to be routed to a receiver side of the network.

10. A system according to claim 2, wherein the node configured as a node for use on a receiver side of a network, associated with a receiver side terminal (4) coupled to the node to receive the data processed by the node.

11. A system according to claim 10 configured to receive routed data through the network that includes data corresponding to multiple processing carried out at a sender side node, and is configured to perform multiple processing which is the inverse to that performed at the receiver side node.

12. A system comprising first and second nodes as claimed in claim 1, for the sender side of a network and for the receiver side node of the network respectively.

13. A network node according to claim 1 operable to receive network routable data that includes routing information and wherein the process code data (P) has been user selected independently of the routing information.

14. A system according to any one of claims 2 to 12 and including a service provider (6; 406; 606) to supply data to the or each said database.

15. A method of updating a system as claimed in claim 14 including supplying new data for the each database to the or each node from the service provider.

## Patentansprüche

1. Netzknoten für die Verwendung in einem Netz, um mehrere Verarbeitungen an Daten, die in dem Netz lenkbar sind, auszuführen, der mehrere Verarbeitungsmodule (26-29; 36, 37; 126-129; 226-229; 326-329; 426-429; 436, 437; 626-629) und eine Steuereinheit (25; 35; 125; 225; 325; 425; 435; 625), die die Daten wahlweise zu den Verarbeitungsmodulen lenkt, um daran eine sequentielle Mehrfachverarbeitung auszuführen, umfasst, **dadurch gekennzeichnet, dass** der Knoten so betreibbar ist, dass er in den lenkbaren Daten Verarbeitungscode-Daten (P) erfasst, die vom Anwender ausgewählten Verarbeitungen entsprechen, die durch die Module an den Daten ausgeführt werden sollen, und so betreibbar ist, dass Reihenfolgedaten (O) bereitgestellt werden, um die Reihenfolge zu bestimmen, in der die vom Anwender ausgewählten Verarbeitungen durch die Verarbeitungsmodule in Abhängigkeit von den erfassten Verarbeitungscode-Daten (P) ausgeführt werden sollen.

2. System, das einen Netzknoten nach Anspruch 1, eine Reihenfolgebestimmungs-Datenbank (B), die die Reihenfolgedaten (O) enthält, und ein Reihenfolgeentscheidungselement (22, 32, 122, 222, 322, 622), das in den lenkbaren Daten die Reihenfolgedaten von der Datenbank in Abhängigkeit von den Verarbeitungscode-Daten (P) bestimmt, umfasst, wobei die Steuereinheit so betreibbar ist, dass sie die zu verarbeitenden Daten in Abhängigkeit von den Reihenfolgedaten zu den Verarbeitungsmodulen lenkt.

3. System nach Anspruch 2, das eine Verarbeitungskategorisierungs-Datenbank (A) enthält, die die Verarbeitungscode-Daten (P) bereitstellt, die den einzelnen vom Anwender ausgewählten Verarbeitungen entsprechen.

4. System nach Anspruch 3, bei dem der Knoten als ein Knoten (2) für die Verwendung auf einer Senderseite eines Netzes konfiguriert und einem senderseitigen Anwenderendgerät (1; 101; 301; 401; 601) zugeordnet ist, um die auszuführenden Verarbeitungen auszuwählen.

5. System nach Anspruch 4, bei dem sich die Reihenfolgebestimmungs-Datenbank (B) in dem Knoten befindet.

6. System nach Anspruch 4, bei dem sich die Verarbeitungskategorisierungs-Datenbank (A) in dem Endgerät befindet.

7. System nach Anspruch 4, bei dem sich die Datenbank (B) in dem Anwenderendgerät befindet.

8. System nach einem der Ansprüche 2 bis 7, bei dem der Knoten (200) so konfiguriert ist, dass er lenkbare Daten, die der Mehrfachverarbeitung unterworfen werden sollen, zusammen mit lenkbaren Daten, für die keine Mehrfachverarbeitung erforderlich ist, empfängt, und eine Klassifizierungs-Datenbank (D) enthält, die Daten zum Klassifizieren der lenkbaren Daten enthält, wodurch nur jene Daten, für die eine Mehrfachverarbeitung erforderlich ist, zu den Verarbeitungsmodulen gelenkt werden.

9. System nach einem der Ansprüche 2 bis 7, bei dem die Verarbeitungsmodule so konfiguriert sind, dass sie Daten bereitstellen, die den Umkehrungen (I) der Verarbeitungen, die sie ausführen, entsprechen, und dass sie die inversen Daten Daten zuordnen, die das Ergebnis ihrer ausgeführten Verarbeitung enthalten und zu einer Empfängerseite des Netzes gelenkt werden sollen.

10. System nach Anspruch 2, bei dem der Knoten als ein Knoten für die Verwendung auf einer Empfängerseite eines Netzes konfiguriert und einem empfängerseitigen Endgerät (4), das mit dem Knoten gekoppelt ist, um die durch den Knoten verarbeiteten Daten zu empfangen, zugeordnet ist.

11. System nach Anspruch 10, das so konfiguriert ist, dass es durch das Netz gelenkte Daten empfängt, die Daten enthalten, die der bei einem senderseitigen Knoten ausgeführten Mehrfachverarbeitung entsprechen, und so konfiguriert ist, dass es eine Mehrfachverarbeitung ausführt, die die Umkehrung jener Verarbeitung ist, die bei dem empfängerseitigen Knoten ausgeführt wird.

12. System, das einen ersten und einen zweiten Knoten nach Anspruch 1 für die Senderseite eines Netzes bzw. für die Empfängerseite des Netzes umfasst.

13. Netzknoten nach Anspruch 1, der so betreibbar ist, dass er durch das Netz lenkbare Daten, die Lenkungsinformationen enthalten, empfängt, wobei die Verarbeitungscode-Daten (P) unabhängig von den Lenkungsinformationen vom Anwender ausgewählt worden sind.

14. System nach einem der Ansprüche 2 bis 12, das einen Dienstanbieter (6; 406; 606) enthält, der Daten für die oder jede Datenbank liefert.

15. Verfahren zum Aktualisieren eines Systems nach Anspruch 14, das das Liefern neuer Daten für die oder jede Datenbank zu dem oder jedem Knoten vom Dienstanbieter umfasst.

## Revendications

1. Noeud de réseau pour l'utilisation dans un réseau pour exécuter de multiples processus sur des données pouvant être routées dans le réseau, comprenant une multiplicité de modules de traitement (26-29; 36, 37; 126-129; 226-229; 326-329; 426-429; 436, 437; 626-629), et une unité de commande (25; 35; 125; 225; 325; 425; 435; 625) pour diriger sélectivement les données vers les modules de traitement pour accomplir sur elles un traitement multiple séquentiel, **caractérisé en ce qu'**on peut faire fonctionner le noeud pour détecter, dans les données pouvant être routées, des données de code de processus (P) correspondant à des processus sélectionnés par l'utilisateur devant être accomplis par les modules sur les données, et on peut le faire fonctionner pour fournir des données d'ordre (O) pour déterminer l'ordre dans lequel les processus sélectionnés par l'utilisateur doivent être accomplis par les modules de traitement, sous la dépendance des données de code de processus (P) détectées.

2. Système comprenant un noeud de réseau selon la revendication 1, une base de données de mise en ordre (B) contenant les données d'ordre (O), et un élément de décision d'ordre (22, 32, 122, 222, 322, 622) pour déterminer les données d'ordre provenant de la base de données sous la dépendance des données de code de processus (P) dans les données pouvant être routées, et dans lequel on peut faire fonctionner l'unité de commande pour diriger les données à traiter vers les modules de traitement, sous la dépendance des données d'ordre.

3. Système selon la revendication 2, incluant une base de données de catégorisation de processus (A) pour fournir les données de code de processus (P) correspondant aux processus individuels sélectionnés par l'utilisateur.

4. Système selon la revendication 3, dans lequel le noeud est configuré comme un noeud (2) pour l'utilisation d'un côté émetteur d'un réseau et est associé à un terminal d'utilisateur du côté émetteur (1; 101; 301; 401; 601) pour sélectionner les processus à effectuer.

5. Système selon la revendication 4, dans lequel la base de données de mise en ordre (B) est à l'intérieur du noeud.

6. Système selon la revendication 4, dans lequel la base de données de catégorisation de processus (A) est à l'intérieur du terminal.

7. Système selon la revendication 4, dans lequel la base de données (B) est à l'intérieur du terminal d'utilisateur.

8. Système selon l'une quelconque des revendications 2 à 7, dans lequel le noeud (200) est configuré pour recevoir des données pouvant être routées devant être soumises au traitement multiple, conjointement à des données pouvant être routées pour lesquelles aucun traitement multiple n'est demandé, et incluant une base de données de classification (D) pour contenir des données pour classer les données pouvant être routées, grâce à quoi seulement les données pour lesquelles un traitement multiple est demandé sont dirigées vers les modules de traitement.

9. Système selon l'une quelconque des revendications 2 à 7, dans lequel les modules de traitement sont configurés pour fournir des données correspondant à l'inverse (I) des processus qu'ils exécutent, et associent les données inverses avec des données qui constituent le résultat de leur processus exécuté, devant être routées vers un côté récepteur du réseau.

10. Système selon la revendication 2, dans lequel le noeud est configuré comme un noeud prévu pour l'utilisation, sur un côté récepteur d'un réseau, associé à un terminal du côté récepteur (4) couplé au noeud pour recevoir les données traitées par le noeud.

11. Système selon la revendication 10, configuré pour recevoir des données routées à travers le réseau qui comprend des données correspondant au traitement multiple accompli à un noeud du côté émetteur, et qui est configuré pour effectuer un traitement multiple qui est l'inverse de celui effectué au noeud du côté récepteur.

12. Système comprenant des premier et second noeuds selon la revendication 1, respectivement pour le côté émetteur d'un réseau et pour le noeud du côté récepteur du réseau.

13. Noeud de réseau selon la revendication 1, qu'on peut faire fonctionner pour recevoir des données pouvant être routées par un réseau qui comprennent une information de routage, et dans lequel les données de code de processus (P) ont été sélectionnées par l'utilisateur indépendamment de l'information de routage.

14. Système selon l'une quelconque des revendications 2 à 12 et incluant un fournisseur de services (6; 406; 606) pour fournir des données à la ou à chaque base de données.

15. Procédé d'actualisation d'un système selon la revendication 14, incluant la fourniture au noeud ou à chaque noeud de nouvelles données pour chaque base de données, à partir du fournisseur de services.
